# FASCICULE DE BREVET EUROPEEN

(11) **EP 0 517 896 B1**
(45) Date de publication et mention de la délivrance du brevet: **20.03.1996**
(21) Numéro de dépôt: 92903461.9
(22) Date de dépôt: 24.12.1991
(51) Int. Cl.: G01V 1/22

(54) **METHODE ET DISPOSITIF POUR SIMPLIFIER LA LOCALISATION D'UNE ZONE SOUTERRAINE DANS LE CADRE D'UNE EXPLORATION SISMIQUE**
VERFAHREN UND VORRICHTUNG ZUR VEREINFACHUNG DER ORTUNG EINER UNTERGRUNDFORMATION IN ZUSAMMENHANG MIT EINER SEISMISCHEN EXPLORATION
METHOD AND DEVICE FOR SIMPLIFYING THE LOCALIZATION OF AN UNDERGROUND ZONE IN SEISMIC EXPLORATION

(30) Priorité: 28.12.1990 FR 9016443
(43) Date de publication de la demande: 16.12.1992
(73) Titulaire: INSTITUT FRANCAIS DU PETROLE, F-92502 Rueil-Malmaison (FR)
(72) Inventeur: RIALAN, Joseph, F-92190 Meudon (FR); THIERRY, Gérard, F-92000 Nanterre (FR); GROUFFAL, Christian, F-92500 Rueil-Malmaison (FR)
(86) Numéro de dépôt international: FR9101067
(87) Numéro de publication internationale: WO9212442

(56) Documents cités:
- EP-A- 0 158 495
- EP-A- 0 260 165
- EP-A- 0 329 546
- WO-A-90/08371
- US-A- 3 946 357
- US-A- 4 589 100

## Description

La présente invention concerne une méthode pour simplifier la localisation d'une zone souterraine étudiée dans le cadre d'opérations d'exploration sismique. Plus particulièrement, la méthode selon l'invention a pour objet de simplifier les opérations d'affectation par lesquelles on associe à des données de type sismique par exemple, les données topographiques des lieux respectifs où elles ont été captées par des récepteurs.

Les méthodes de prospection sismique comportent généralement l'émission dans les formations à explorer, d'ondes sismiques sous forme de vibrations ou d'impulsions, la réception des ondes qui se sont propagées dans le sous-sol par un ensemble de réception comportant une pluralité de capteurs disposés à la surface du sous-sol ou à son voisinage, l'enregistrement des ondes captées et une série de traitements destinés à améliorer la représentativité des coupes sismiques réalisées à partir des enregistrements.

Les méthodes modernes comportent l'utilisation d'appareils d'acquisition de données répartis à intervalles réguliers sur une distance parfois de plusieurs kilomètres. Chacun d'eux est adapté à collecter des signaux sismiques captés par un ou plusieurs géophones, à les numériser et stocker dans une mémoire avant leur transmission en temps réel ou différé à un poste central de commande et d'enregistrement. Généralement, les différents appareils d'acquisition transmettent séquentiellement les données collectées au poste central, soit directement soit par l'intermédiaire d'éléments-relais.

Différents systèmes de transmission de ce type sont décrits par exemple dans les demandes de brevet français publiées.2 627 652, 2 608 780, 2 602 875, 2 599 533, 2 538 561, 2 511 772.

Les coupes sismiques obtenues à l'issue des opérations sismiques étant représentatives d'une zone du sous-sol qui se trouve à l'aplomb de l'alignement des récepteurs disposés sur le terrain, il est important de ce fait, de localiser dans l'espace tous les emplacements de réception et donc de leur associer des données topographiques précises.

Le repérage de la position des points de réception est souvent effectué au moment de l'installation des capteurs et des appareils d'acquisition sur le terrain. Une technique connue consiste à utiliser par exemple un système de positionnement par radio qui calcule sa position par rapport à celle de plusieurs transmetteurs dont les positions sont connues, localisés à terre ou bien sur des satellites, comme il est bien connu des spécialistes. Les données de position relevées à l'emplacement de chaque capteur ou au barycentre de l'ensemble de capteurs interconnectés constituant chaque récepteur sismique, sont associées par exemple au numéro de série de l'appareil d'acquisition et/ou son numéro d'emplacement dans la série d'appareils répartis sur le terrain. Toutes ces données collectées par l'équipe de terrain peuvent être apportées au poste central pour y être enregistrées sur un enregistreur auxiliaire souvent différent de l'enregistreur pour les données sismiques. Il faut donc procéder nécessairement à une mise en relation de données sur deux supports différents pour appa-irer aux données sismiques des indications topographiques correspondantes, et ceci est parfois une cause d'erreurs. Les risques d'erreurs et de confusion augmentent aussi du fait du nombre toujours plus grand d'appareils d'acquisition que l'on met en place sur le terrain pour les besoins de l'exploration sismique, ce qui allongent les opérations de report et d'appairage.

Par le brevet US 4 589 100, on connaît un système d'exploration sismique comportant une station centrale de commande et d'enregistrement 12, un ensemble d'appareils d'acquisition sismique répartis sur le terrain suivant une grille et un ensemble de positionnement pour déterminer la position géographique du système sur le terrain. La station centrale peut comporter un équipement lui permettant de capter les signaux hertziens émis par un système de positionnement géographique tel que le système GPS et elle est pourvue d'un équipement lui permettant de déterminer sa position absolue dans l'espace. Les appareils d'acquisition sur le terrain comporte un équipement suffisant pour détecter des signaux indicatifs de leur positionnement relatif par rapport à la station centrale. Les signaux reçus pré-traités dans chaque appareil d'acquisition, sont transmis à la station centrale et combinés avec ceux reçus à cette dernière pour déterminer leur positionnement sur le terrain.

Le brevet WO-A-9008371 montre le principe de l'association automatique d'un ensemble de positionnement de type GPS à un ensemble d'acquisition et de transmission d'images d'un véhicule en mouvement, pour réaliser un système de sécurité.

La méthode selon l'invention permet de simplifier la localisation d'une zone souterraine restituée par une coupe sismique qui est réalisée par traitement des signaux sismiques captés par un ensemble de récepteurs sismiques en un grand nombre d'emplacements de réception répartis sur le terrain, en réponse à des signaux émis dans le sous-sol par une source de signaux sismiques, les signaux sismiques captés étant collectés par une pluralité d'appareils d'acquisition sismiques répartis sur le terrain et transmis par un système de transmission à un poste central de commande et d'enregistrement par une utilisation de moyens de positionnement pour déterminer la position géographique d'un emplacement à partir de signaux hertziens reçus audit emplacement. La méthode est caractérisée en ce qu'elle comporte :
- le relevé direct de la position sur le terrain de chaque récepteur sismique par déplacement desdits moyens de positionnement successivement jusqu'à niveau de chaque récepteur;
- le transfert et la mémorisation dans chaque appareil d'acquisition, de données de positionnement délivrées par lesdits moyens de positionnement résultant dudit repérage effectué pour chacun desdits récepteurs associés à l'appareil d'acquisition, de façon à constituer pour chacun d'eux une étiquette de positionnement;
- l'assignation automatique aux données sismiques collectées par chaque récepteur, de l'étiquette de positionnement correspondante; et
- la transmission des données collectées munies de leurs étiquettes de positionnement respectives depuis chaque appareil d'acquisition et leur concentration dans le poste central de commande et d'enregistrement, de manière à constituer des jeux de traces d'enregistrement associés chacune à un emplacement de réception.

Suivant un mode de réalisation le transfert des données de positionnement déterminées par lesdits moyens de positionnement est effectué automatiquement vers chaque appareil d'acquisition par une voie de transmission établie entre lui et lesdits moyens de positionnement.

Dans le cas où chaque récepteur sismique comporte un alignement de plusieurs capteurs interconnectés, les moyens de positionnement sont utilisés par exemple pour déterminer la position graphique d'un point de chaque alignement.

La transmission des données collectées au poste central depuis chaque appareil d'acquisition ou au moins une partie d'entre eux, est réalisée par exemple par voie hertzienne ou encore par câble.

La méthode selon l'invention telle que définie ci-dessus, présente de nombreux avantages tenant principalement à son mode de saisie et d'attribution des données de position. Un opérateur se déplace sur le terrain et vient positionner au voisinage de chaque géophone ou groupe de géophones constituant une trace, un ensemble de positionnement adapté à calculer des données de position à partir de signaux de position fournis par un système de repérage à signaux hertziens. Les données de position au lieu considéré sont introduites dans l'appareil d'acquisition local associé. L'introduction peut se faire de façon manuelle ou mieux par une transmission à courte distance entre l'ensemble de positionnement et chaque appareil, via une liaison par câble et/ou une liaison immatérielle au moyen d'un boîtier de communication à rayons lumineux par exemple. Les données de position introduites, sont stockées sur une mémoire auxiliaire et au moment des transmissions des données vers la station centrale, les données de position sont lues dans la mémoire auxiliaire et incluses dans une en-tête de "tir" ou une en-tête de "trace". Les données de positionnement géographique peuvent être introduites par exemple au moment du positionnement de chaque appareil ou boîtier d'acquisition sur le terrain. Avec un ensemble éventuellement unique de positionnement et donc à moindre coût, on peut successivement associer des étiquettes de localisation à toutes les données sismiques transmises depuis les différents appareils d'acquisition quel que soit leur nombre. Le système selon l'invention peut être utilisé avec des appareils d'acquisition existants sans modification de ces derniers.

L'association systématique d'une adresse topographique aux messages transmis s'avère aussi très utile pour éviter les risques de confusion quand on doit remplacer un appareil d'acquisition défectueux par un autre dont le numéro d'ordre ou le numéro de série est différent.

Le dispositif pour la mise en oeuvre de la méthode comporte des moyens de positionnement pour déterminer la position géographique d'un emplacement à partir de signaux hertziens reçus audit emplacement et il est caractérisé en ce qu'il comporte des moyens de transfert des données mesurées à l'emplacement de chaque récepteur sismique, dans l'appareil d'acquisition associé, et un ensemble d'adressage dans celui-ci comportant des moyens pour constituer l'étiquette de positionnement ainsi que des moyens pour associer à chacune des données transmises l'étiquette de positionnement.

Les moyens de positonnement comportent un boîtier de réception (2) adapté à calculer des positions par triangulation à partir de signaux reçus de plusieurs points de référence, par exemple ou bien d'après des signaux hertziens indicatifs de données de positionnement.

Comme moyens de transfert des données de position mesurées par le boîtier de réception aux appareils d'acquision, on utilise par exemple un élément de transmission par ondes notamment par rayons infra-rouges.

L'ensemble d'adressage comporte par exemple un transducteur optique associé à un circuit d'interface, un ensemble de traitement pourvu d'une mémoire centrale pour les données sismiques et d'une mémoire auxiliaire pour les données des étiquettes de positionnement, l'ensemble et traitement étant adapté à associer aux données sismiques l'étiquette de positionnement correspondante.

D'autres caractéristiques et avantages de la méthode et du dispositif selon l'invention apparaîtront mieux à la lecture de la description ci-après de modes de réalisation décrits à titre d'exemples non limitatifs, en se référant aux dessins annexés où :
- la Fig.1 montre schématiquement un dispositif de réception sismique disposé sur le terrain;
- la Fig.2 montre un mode de réalisation possible avec lequel on peut introduire des données topographiques dans chaque appareil d'acquisition;
- la Fig.3 est un schéma synoptique de l'ensemble contenu dans chaque appareil d'acquisition; et
- la Fig.4 montre un exemple possible de format pour les messages transmis au poste central depuis chacun des appareils d'acquisition.

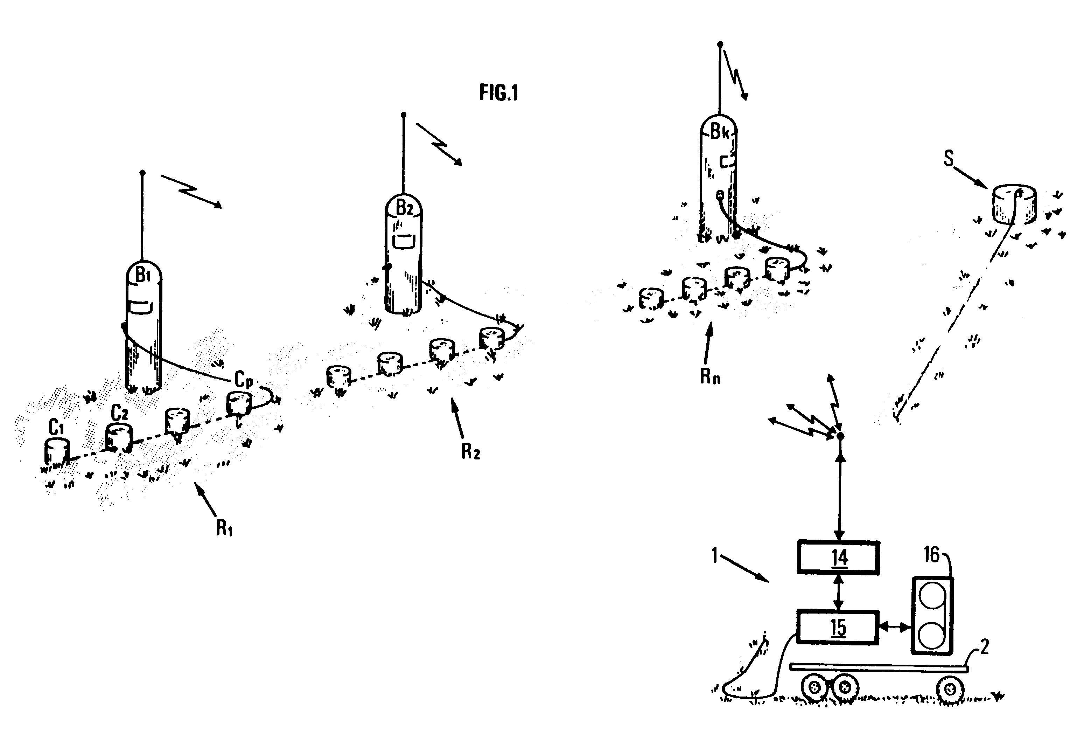

Un système d'exploration sismique comporte une source d'ondes simiques S, et un dispositif de réception et d'acquisition sismique comprenant généralement (Fig.1) un grand nombre de récepteurs sismiques R1, R2, ..., Rn qui sont répartis le long d'un profil sismique à explorer, des appareils d'acquisition B1, B2 ..., Bk répartis sur le terrain et un poste central de commande et d'enregistrement 1 installé sur un véhicule 2, pour assurer la gestion des cycles successifs d'émission-réception qui sont réalisés.

Chaque récepteur sismique R1, R2 ..., Rn, comporte généralement plusieurs capteurs élémentaires C1, C2, ..., Cp interconnectés électriquement. Chaque signal résultant sert à produire une trace d'enregistrement sismique. Chacun des appareils d'acquisition B1-Bk est connecté à un ou plusieurs récepteurs sismiques R. Ils sont adaptés à numériser les signaux qu'ils reçoivent des récepteurs associés et à les mémoriser. Le poste central 1 commande les déclenchements successifs de la source S, l'acquisition par les différents appareils des signaux renvoyés par les discontinuités du sous-sol et reçus par les récepteurs R1-Rn et ensuite, il commande la centralisation des données mémorisées. Sur commande du pcste central 1, chaque appareil d'acquisition lui transfère les données qu'il a mémorisées. On peut utiliser avantageusement les appareils d'acquisition décrits dans le brevet FR 2 511 772 par exemple. Ces appareils peuvent être indifféremment reliés au poste central soit par un câble de transmission commun, soit par une liaison hertzienne. En l'absence de câble, chaque appareil B1-Bn communique par radio avec le poste central (cas représenté sur la Fig. 1). La connexion du câble à un appareil d'acquisition met automatiquement hors circuit les moyens radio propres et la communication s'effectue via le câble. Des systèmes de transmission par radio utilisant des appareils similaires sont décrits également dans les demandes de brevet publiées FR 2 599 533 et 2 627 652 par exemple.

La méthode selon l'invention permet de situer avec précision la zone souterraine étudiée par association permanente aux données sismiques reçues, des indications topographiques des lieux respectifs où elles ont été reçues. Si chaque trace est constituée par le signal d'un capteur unique, ce lieu est bien évidemment l'emplacement de celui-ci. Dans le cas plus courant où une trace est produite par un groupe de capteurs (C1-Cp) alignés et interconnectés, le lieu considéré est un point de l'alignement, son milieu par exemple.

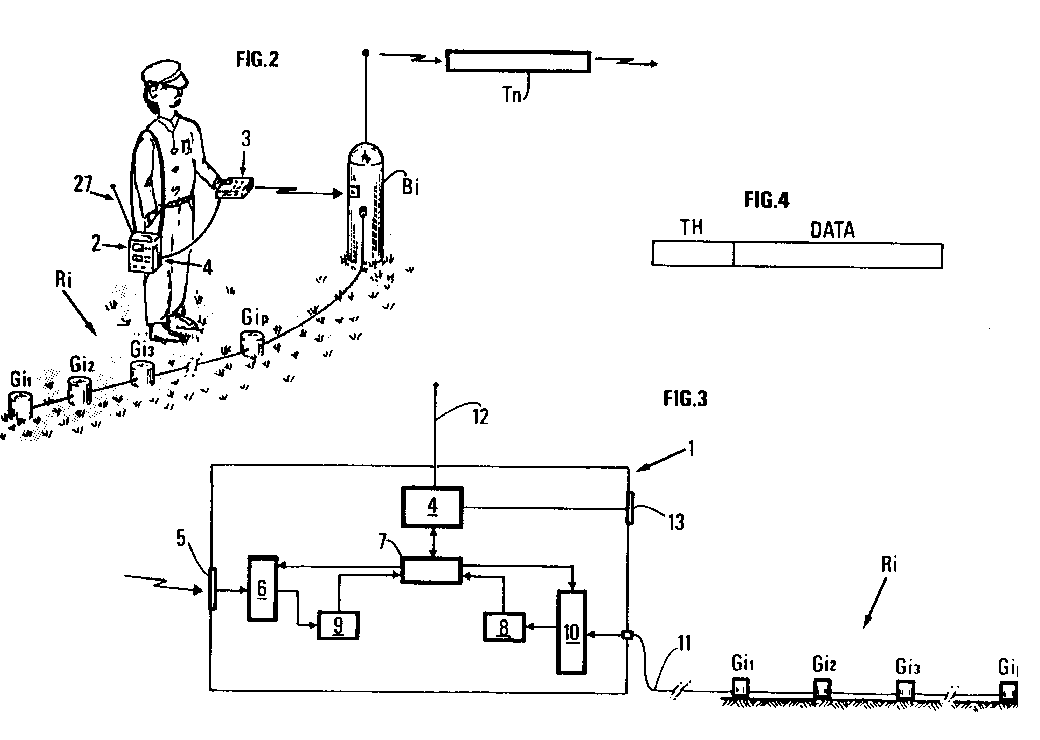

Un opérateur dans l'équipe de mise en place des récepteurs sur le site d'exploration choisi, procède (Fig. 2) à la détermination des données topographiques et à leur inclusion dans l'appareil d'acquisition associé.

Il est commode d'utiliser pour cette détermination un dispositif de positionnement par radio adapté à mesurer les déphasages ou les décalages de temps entre des signaux émis depuis plusieurs emplacements bien localisés et d'en déduire la position du point de réception. Un système connu de positionnement par référence à des satellites et/ou à une station au sol bien localisée, tel que le système GPS (Global Positioning System) par exemple, peut être utilisé à cet effet. Dans un mode de fonctionnement relatif, un système de ce genre donne la position d'un point de mesure avec une précision de l'ordre de 10⁻⁶ suffisante pour les besoins de l'exploration sismique.

Dans le cas où l'on utilise ce système de positionnement connu, l'opérateur transporte avec lui un boîtier de mesure 2 muni d'une antenne de réception 2A. Il se déplace sur le site jusqu'aux lieux d'implantation des récepteurs successivement. Il positionne le boîtier de mesure 2 au centre de chaque récepteur Ri, et celui-ci produit des indications de positionnement qui sont aussitôt reportées dans l'appareil d'acquisition associé Bi.

Le transfert peut être effectué bien sûr en connectant directement par un câble le boîtier de mesure 2 à l'appareil d'acquisition. Pour éviter les déplacements entre le lieu de réception et l'appareil d'acquisition correspondant, il est préférable cependant de transférer pour les mesures, au moyen par exemple du dispositif de transmission décrit dans le brevet FR 2 602 875 précité qui est adapté à effectuer des transmissions de signaux par modulation d'un pinceau de lumière infra-rouge entre un boîtier de transmission I-R 3 et chaque appareil d'acquisition BL. Les mesures fournies par le boîtier de mesure 2 en chaque lieu de réception sismique, sont transférées par une liaison du type RS 232 au boîtier de transmission I-R 3 qui est par exemple tenu en main par l'opérateur et transmises directement à l'appareil d'acquisition Si par voie optique I-R, sans que l'opérateur quitte le lieu de mesure.

Un appareil d'acquisition comporte schématiquement (Fig. 3) une première unité de transmission 4 pour gérer les communications avec le poste central 1, une deuxième unité d'émission-réception de signaux infra-rouge incluant un transducteur optique 5 et un circuit d'interface 6 pour l'adaptation des signaux reçus et émis, une unité centrale 7 pour piloter et synchroniser les opérations d'acquisition et de communication, une mémoire principale 8 associée à une mémoire auxiliaire 9. La mémoire centrale 8 est connectée à une unité d'acquisition 10 adaptée à amplifier, filtrer, échantillonner et numériser les signaux reçus d'au moins un récepteur Ri à qui elle est connectée par une ligne 11. Quand plusieurs récepteurs sont reliés à un même appareil d'acquisition, l'unité d'acquisition dans celui-ci comporte un multiplexeur en tête. La mémoire principale 8 sert au stockage des données sismiques relative à un cycle d'émission-réception ou "tir". La mémoire auxiliaire 9 est reliée au circuit d'interface 6 et sert à la mémorisation des données topographiques reçues du boîtier de transmission. La première unité de transmission 4 est adaptée à échanger des signaux (ordres, messages d'acquittement et données) avec le poste central soit par voie hertzienne par l'intermédiaire d'une antenne 12, soit encore par un câble éventuel qui se connecte sur une prise 13.

Les messages correspondant à des données sismiques transmises vers le poste central, comportent par exemple (Fig.4) un en-tête de trace TH regroupant des données techniques sur l'acquisition effectuée : paramètres de filtrage, fréquence d'échantillonnage des signaux sismiques, gains d'amplification appliqués etc. Les données sismiques mémorisées DATA sont transmises après cette en-tête.

La méthode selon l'invention est réalisée en incluant de façon systématique les données topographiques aux messages transmis. A cet effet, l'unité centrale 7 est adaptée à venir lire à chaque "tir", la mémoire auxiliaire 9 et à inclure son contenu soit dans l'en-tête de "tir" soit dans l'en-tête de trace.

Le poste central 1 comporte un ensemble d'émission-réception 14 adapté notamment à recevoir les messages aussi bien par câble que par voie hertzienne. Un ensemble de commande et de synchronisation 15, les décode et leur ajoute des données concernant le numéro de l'emplacement où la source sismique a été déclenchée lors du "tir", le numéro de ce "tir", le nombre de traces sismiques principales et auxiliaires etc. Ces données complétées sont ensuite formatées suivant un format normalisé par la S.E.G. (Society of Exploration Geophysists) pour les enregistrements sur bandes avant d'être transférées sur un enregistreur 16 à bande par exemple pour des traitements ultérieurs.

Sur chaque bande, les données reçues à un emplacement de réception, sont donc associées étroitement et automatiquement aux données topographiques dudit emplacement. Aucune erreur d'affectation ne peut donc se produire.

## Revendications

1. Méthode pour simplifier la localisation d'une zone souterraine restituée par une coupe sismique qui est réalisée par traitement des signaux sismiques captés par un ensemble de récepteurs sismiques (R1-Rn) en un grand nombre d'emplacements de réception répartis sur le terrain, en réponse à des signaux émis dans le sous-sol par une source (S) de signaux sismiques, les signaux sismiques captés étant collectés par une pluralité d'appareils d'acquisition sismiques (B1-Bk) répartis sur le terrain et transmis par un système de transmission à un poste central de commande et d'enregistrement, la méthode comprenant l'utilisation de moyens de positionnement pour déterminer la position géographique d'un emplacement à partir de signaux hertziens reçus audit emplacement et étant caractérisée en ce qu'elle comporte :
- le relevé direct de la position sur le terrain de chaque récepteur sismique (R1-Rn) par déplacement desdits moyens de positionnement successivement jusqu'au niveau de chaque récepteur;
- le transfert et la mémorisation dans chaque appareil d'acquisition (B1-Bk), de données de positionnement délivrées par lesdits moyens de positionnement résultant dudit repérage effectué pour chacun desdits récepteurs associés à l'appareil d'acquisition, de façon à constituer pour chacun d'eux une étiquette de positionnement;
- l'assignation automatique aux données sismiques collectées par chaque récepteur, de l'étiquette de positionnement correspondante; et
- la transmission des données collectées munies de leurs étiquettes de positionnement respectives depuis chaque appareil d'acquisition et leur concentration dans le poste central de commande et d'enregistrement, de manière à constituer des jeux de traces d'enregistrement associés chacune à un emplacement de réception.

2. Méthode selon la revendication 1, caractérisée en ce que le transfert des données de positionnement déterminées par lesdits moyens de positionnement est effectué automatiquement vers chaque appareil d'acquisition par une voie de transmission établie entre lui et lesdits moyens de positionnement.

3. Méthode selon la revendication ou 2, dans laquelle chaque récepteur sismique (R1-Rn) comporte un alignement de plusieurs capteurs (C1-Cp) interconnectés, caractérisée en ce que l'on utilise les moyens de positionnement pour déterminer la position géographique d'un point de chaque alignement.

4. Méthode selon l'une des revendications 1 ou 3, caractérisée en ce que la transmission des données collectées au poste central depuis chaque appareil d'acquisition, est réalisée par radio.

5. Méthode selon l'une des revendications 1 à 4, caractérisée en ce que la transmission des données collectées au poste central depuis une partie au moins des appareils d'acquisition, est effectuée par câble.

6. Dispositif pour la mise en oeuvre de la méthode selon l'une des revendications précédentes, permettant de simplifier la localisation d'une zone souterraine restituée par une coupe sismique laquelle est réalisée à partir de signaux sismiques captés par un ensemble de récepteurs sismiques (R1-Rn) en un grand nombre de points répartis sur le terrain, en réponse à des signaux émis dans le sous-sol par une source (5) de signaux sismiques, les signaux sismiques captés étant collectés par une pluralité d'appareils d'acquisition sismiques (B1-Bk) répartis sur le terrain et transmis par un système de transmission à un poste central (1) de commande et d'enregistrement, le dispositif comportant des moyens (2) de positionnement pour déterminer la position géographique d'emplacements à partir de signaux hertziens reçus auxdits emplacements et étant caractérisé en ce qu'il comporte des moyens de transfert des données mesurées à l'emplacement de chaque récepteur sismique (Ri), dans l'appareil d'acquisition associé (Bi), et un ensemble d'adressage (7, 9) dans celui-ci comportant des moyens pour constituer l'étiquette de positionnement ainsi que des moyens pour associer à chacune des données transmises l'étiquette de positionnement.

7. Dispositif selon la revendication 6, caractérisé en ce que lesdits moyens de positonnement comportent un boîtier de réception (2) adapté à calculer des positions par triangulation à partir de signaux reçus de plusieurs points de référence.

8. Dispositif selon la revendication 6, caractérisé en ce que lesdits moyens de positionnement comportent un boîtier adapté à effectuer des calculs de position d'après des signaux hertziens indicatifs de données de positionnement.

9. Dispositif selon la revendication 7 ou 8, caractérisé en ce que les moyens de transfert aux appareils d'acquision des données de position mesurées par le boîtier de réception (2), comportent un élément (3) de transmission par ondes.

10. Dispositif selon la revendication 8 ou 9, caractérisé en ce que l'élément de transmission (3) est adapté à émettre et recevoir des ondes infra-rouges modulées.

11. Dispositif selon l'une des revendications 8 à 10, caractérisé en ce que l'ensemble d'adressage comporte un transducteur optique (5) associé à un circuit d'interface (6), un ensemble de traitement pourvu d'une mémoire centrale (8) pour les données sismiques et d'une mémoire auxiliaire (9) pour les données des étiquettes de positionnement, l'ensemble et traitement étant adapté à associer aux données sismiques l'étiquette de positionnement correspondante.

## Patentansprüche

1. Verfahren zum Vereinfachen der Lokalisierung einer unterirdischen Zone, die durch einen seismischen Schnitt rekonstruiert wird, welcher durch eine Verarbeitung von seismischen Signalen verwirklicht wird, die durch eine Gesamtheit von seismischen Empfängern (R1-Rn) in einer großen Anzahl von über das Gelände verteilten Empfangsstandorten in Antwort auf in dem Untergrund durch eine Quelle (S) von seismischen Signalen ausgesendeten Signalen aufgenommen werden, wobei die empfangenen seismischen Signale durch eine Vielzahl von über das Gelände verteilten seismischen Einrichtungen (B1-Bk) zur Erfassung gesammelt und durch ein System zur Übertragung an eine zentrale Stelle zur Steuerung und zur Aufzeichnung übertragen werden, wobei das Verfahren die Verwendung von Einrichtungen zur Positionierung umfaßt, um die geographische Position eines Standortes auf der Grundlage von an dem Standort empfangenen Funksignalen zu bestimmen, und dadurch gekennzeichnet ist, daß es umfaßt:
- die direkte Vermessung der Position auf dem Gelände jedes seismischen Empfängers (R1-Rn) durch eine aufeinanderfolgende Verschiebung der Einrichtungen zur Positionierung bis zu dem Niveau jedes Empfängers,
- die Übermittlung und die Speicherung von Daten zur Positionierung in jeder Einrichtung (B1-Bk) zur Erfassung, die durch die Einrichtungen zur Positionierung geliefert werden, welche aus der für jeden mit der Einrichtung zur Erfassung verbundenen Empfänger durchgeführten Ortung resultieren, derart, um für jeden von ihnen ein Etikett zur Positionierung bilden,
- die automatische Zuteilung von dem korrespondierenden Etikett zur Positionierung an die gesammelten seismischen Daten durch jeden Empfänger, und
- die Übertragung von gesammelten, mit ihren entsprechenden Etiketten zur Positionierung versehenen Daten von jeder Einrichtung zur Erfassung und deren Konzentration in der zentralen Stelle zur Steuerung und zur Aufzeichnung, derart, um Gruppen von Spuren zur Aufzeichnung zu bilden, die jeweils mit einem Empfangsstandort verbunden sind.

2. Verfahren nach Anspruch 1, dadurch gekennzeichnet, daß die Übertragung von Daten zur Positionierung, die durch die Einrichtungen zur Positionierung bestimmt werden, zu jeder Einrichtung zur Erfassung automatisch über einen Übertragungsweg, der zwischen ihr und den Einrichtungen zur Positionierung errichtet ist, durchgeführt wird.

3. Verfahren nach Anspruch 1 oder 2, bei welchem jeder seismische Empfänger (R1-Rn) eine Ausrichtung von mehreren miteinander verbundenen Aufnehmern (C1-Cp) umfaßt, dadurch gekennzeichnet, daß man die Einrichtungen zur Positionierung verwendet, um die geographische Position eines Punktes jeder Ausrichtung zu bestimmen.

4. Verfahren nach einem der Ansprüche 1 oder 3, dadurch gekennzeichnet, daß die Übertragung der gesammelten Daten an die zentrale Stelle von jeder Einrichtung zur Erfassung über Funk verwirklicht wird.

5. Verfahren nach einem der Ansprüche 1 bis 4, dadurch gekennzeichnet, daß die Übertragung der gesammelten Daten an die zentrale Stelle von wenigstens einem Teil der Einrichtungen zur Erfassung über Kabel vorgenommen wird.

6. Vorrichtung zur Durchführung des Verfahrens nach einem der vorhergehenden Ansprüche, die gestattet, die Lokalisierung einer unterirdischen Zone zu vereinfachen, welche durch einen seismischen Schnitt rekonstruiert wird, der auf der Grundlage von seismischen Signalen verwirklicht wird, welche durch eine Gesamtheit von seismischen Empfängern (R1-Rn) in einer großen Anzahl von über das Gelände verteilten Punkten in Antwort auf in dem Untergrund durch eine Quelle (5) von seismischen Signalen ausgesendeten Signalen aufgenommen werden, wobei die aufgenommenen seismischen Signale durch eine Vielzahl von über das Gelände verteilten seismischen Einrichtungen (B1-Bk) zur Erfassung gesammelt und durch ein System zur Übertragung an eine zentrale Stelle (1) zur Steuerung und zur Aufzeichnung übertragen werden, wobei die Vorrichtung Einrichtungen (2) zur Positionierung umfaßt, um die geographische Position von Standorten auf der Grundlage von an den Standorten empfangenen Funksignalen zu bestimmen und dadurch gekennzeichnet ist, daß sie Einrichtungen zur Übertragung von an dem Standort jedes seismischen Empfängers (Ri) gemessenen Daten in der verbundenen Einrichtung (Bi) zur Erfassung und eine Gesamtheit (7, 9) zur Adressierung in dieser, die Einrichtungen zum Bilden des Etikettes zur Positionierung sowie Einrichtungen zum Zuordnen des Etikettes zur Positionierung zu jeder der übertragenen Daten umfaßt, umfaßt.

7. Vorrichtung nach Anspruch 6, dadurch gekennzeichnet, daß die Einrichtungen zur Positionierung ein Gehäuse (2) zum Empfang umfassen, das geeignet ist, Positionen durch Triangulation auf der Grundlage von Signalen, welche von mehreren Bezugspunkten erhalten sind, zu berechnen.

8. Vorrichtung nach Anspruch 6, dadurch gekennzeichnet, daß die Einrichtungen zur Positionierung ein Gehäuse umfassen, das geeignet ist, Positionberechnungen nach Daten zur Positionierung anzeigenden Funksignalen durchzuführen.

9. Vorrichtung nach Anspruch 7 oder 8, dadurch gekennzeichnet, daß die Einrichtungen zur Übertragung von Positionsdaten, die durch das Gehäuse (2) zum Empfang gemessen sind, an die Einrichtungen zur Erfassung ein Element (3) zur Übertragung durch Wellen umfassen.

10. Vorrichtung nach Anspruch 8 oder 9, dadurch gekennzeichnet, daß das Element (3) zur Übertragung geeignet ist, modulierte Infrarot-Wellen auszusenden und zu empfangen.

11. Vorrichtung nach einem der Ansprüche 8 bis 10, dadurch gekennzeichnet, daß die Gesamtheit zur Adressierung einen optischen Transduktor (5), der mit einem Schnittstellenschaltkreis (6) verbunden ist, eine Einheit zur Verarbeitung, die mit einem zentralen Speicher (8) für die seismischen Daten und einem Hilfsspeicher (9) für die Daten von Etiketten zur Positionierung versehen ist, umfaßt, wobei die Einheit und Verarbeitung geeignet ist, das korrespondierende Etikett zur Positionierung mit den seismischen Daten zu verbinden.

## Claims

1. Method for simplifying the siting of a subsurface zone reconstructed by a seismic section which is produced by processing seismic signals picked up by an array of seismic receivers (R1-Rn) at a large number of receiving sites distributed around the field in response to signals emitted in the sub-soil by a seismic signal source (S), the seismic signals picked up being collected by a plurality of seismic acquisition devices (B1-Bk) distributed around the field and then transmitted to a central control and recording station, the method involving the use of positioning means to determine the geographical position of a site on the basis of hertzian signals received at the said site and being characterised in that it comprises:
- directly recording the position in the field of each seismic receiver (R1-Rn) by moving positioning means successively up to each receiver;
- transferring and storing in the memory of each acquisition device (B1-Bk) position data supplied by the said positioning means resulting from the siting operation for each of the receivers assigned to the acquisition device, so as to establish a position label for each of them;
- automatically assigning the corresponding position label to the seismic data collected by each receiver, and
- transmitting the data collected, tagged with their respective position labels from each acquisition device and centralising them in the central control and recording station so as to establish sets of recording traces, each of which is associated with a receiving location.

2. Method as claimed in claim 1, characterised in that the position data determined by the said positioning means is automatically transferred to each acquisition device via a transmission channel established between it and the said positioning means.

3. Method as claimed in claim 1 or 2, in which each seismic receiver (R1-Rn) has an alignment of several inter-connected sensors (C1-Cp), characterised in that positioning means are used to determine the geographical position of a point of each alignment.

4. Method as claimed in one of claims 1 or 3, characterised in that the data collected at the central station from each acquisition device is transmitted by radio.

5. Method as claimed in one of claims 1 to 4, characterised in that the data collected at the central station from at least some of the acquisition devices is transmitted by cable.

6. Device for implementing the method as claimed in one of the previous claims, making it possible to simplify the siting of a sub-soil zone reconstituted by a seismic section drawn up from seismic signals picked up by an array of seismic sensors (R1-Rn) at a large number of locations distributed around the field in response to signals emitted in the sub-soil by a seismic signal source (5), the seismic signals picked up being collected by a plurality of seismic acquisition devices (B1-Bk) distributed over the field and transmitted via a transmission system to a central control and recording station (1), the device having positioning means (2) to determine the geographical position of locations using hertzian signals received at the said locations and being characterised in that it has means for transferring data measured at the site of each seismic receiver (ri) to an assigned acquisition device (Bi) and to an addressing unit (7, 9) therein, which has means for establishing the position label as well as means for associating the position label with each piece of data transmitted.

7. Device as claimed in claim 6, characterized in that the positioning means comprises a reception box (2) adapted to calculate positions by triangulation on the basis of signals received from several reference points.

8. Device as claimed in claim 6, characterized in that the positioning means comprises a reception box (2) adapted to calculate positions on the basis of hertzian signals representative of position data.

9. Device as claimed in claim 7 or 8, characterized in that the means for transferring to the acquisition devices position data measured by the reception box, comprise a wave transmission element (3).

10. Device as claimed in claim 8 or 9, characterized in that the the transmission element is adapted to transmit and receive modulated infra-red waves.

11. Device as claimed in one of claims 8 to 10, characterized in that the adressing unit comprises a optical transducer associated with an interface circuit, a processing assembly provided with a central memory (8) for the seismic data and a auxiliary memory (9) for the data in the position labels, the processing assembly being adapted to associate to the seismic data, the corresponding position label.
